# EUROPÄISCHE PATENTANMELDUNG

(11) **EP 3 103 583 A1**
(43) Veröffentlichungstag der Anmeldung: **14.12.2016**
(21) Anmeldenummer: 16173088.2
(22) Anmeldetag: 06.06.2016
(51) Int. Cl.: B23Q 11/00, B23Q 11/08, F16C 29/08

(54) **VORRICHTUNG ZUR SPANENDEN BEARBEITUNG VON WERKSTÜCKEN**

(30) Priorität: 08.06.2015 DE 102015109002
(71) Anmelder: Moroff und Baierl Gmbh, 89568 Hermaringen (DE)
(72) Erfinder: Moroff, Wolfgang Albrecht, 89537 Giengen-Hürben (DE)
(74) Vertreter: Schmid, Wolfgang

(57) **Zusammenfassung**

Eine Vorrichtung (1) zur spanenden Bearbeitung von Werkstücken (2) weist wenigstens ein Bearbeitungswerkzeug (3), wenigstens eine Halteeinrichtung (4) für das Werkstück (2), wenigstens eine Antriebseinrichtung (16) zur Erzeugung einer Relativbewegung zwischen dem Bearbeitungswerkzeug (3) und dem Werkstück (2) und wenigstens eine Führungseinrichtung (6) zur Führung der Relativbewegung zwischen dem Bearbeitungswerkzeug (3) und dem Werkstück (2) auf. Die Führungseinrichtung (6) weist wenigstens ein Führungselement (7) und wenigstens ein das Führungselement (7) zumindest teilweise abdeckendes Abdeckelement (8) auf. Zwischen dem Führungselement (7) und dem Abdeckelement (8) ist zumindest abschnittsweise ein Spalt vorhanden. Die Vorrichtung (1) weist des Weiteren eine Einrichtung (10) zur Erzeugung eines Luftstroms in einem Raum (9) zwischen der Führungseinrichtung (6) und dem Abdeckelement (8) auf, welche eine Luftstromerzeugungsquelle (11) aufweist. Die Einrichtung (10) zur Erzeugung des Luftstroms in dem Raum (9) zwischen der Führungseinrichtung (6) und dem Abdeckelement (8) weist wenigstens einen Luftkanal (12) auf, der mehrere Öffnungen (13) oder eine längliche Öffnung in den Raum (9) zwischen der Führungseinrichtung (6) und dem Abdeckelement (8) aufweist. Die Einrichtung (10) zur Erzeugung des Luftstroms in dem Raum (9) zwischen der Führungseinrichtung (6) und dem Abdeckelement (8) ist so ausgebildet, dass in wenigstens annähernd sämtlichen Bereichen des Spalts ein wenigstens annähernd gleichmäßiger Volumenstrom vorliegt.

## Beschreibung

Die Erfindung betrifft eine Vorrichtung zur spanenden Bearbeitung von Werkstücken, mit wenigstens einem Bearbeitungswerkzeug, mit wenigstens einer Halteeinrichtung für das Werkstück, mit wenigstens einer Antriebseinrichtung zur Erzeugung einer Relativbewegung zwischen dem Bearbeitungswerkzeug und dem Werkstück, nach der im Oberbegriff von Anspruch 1 näher definierten Art.

Üblicherweise werden die Führungseinrichtungen an Bearbeitungsvorrichtungen, wie Werkzeugmaschinen, Bearbeitungszentren, Dreh-, Fräs-, Säge-, Schleif- und Poliermaschinen, durch gleitende Dichtungen an den beweglichen Komponenten, gegebenenfalls ergänzt durch Vorsatzdichtungen und Abstreifer, realisiert. Der Nachteil dieser Lösungen besteht darin, dass es sich stets um Verschleißteile handelt, die, insbesondere nach einer bestimmten Benutzungsdauer, keine Dichtigkeit gewährleisten können. Dadurch können bei der Bearbeitung entstehende Fremdpartikel, wie Späne, Staub und andere Bearbeitungsrückstände, in den Bereich der Antriebs- und Führungseinrichtungen gelangen. Ein weiteres Problem besteht darin, dass es von Zeit zu Zeit notwendig ist, die Führungselemente zu schmieren, beispielsweise mit Öl oder Fett, wodurch unerwünschte Partikel noch stärker an den Führungselementen anhaften.

Bei aus dem allgemeinen Stand der Technik bekannten Lösungen werden die Führungs- und Antriebselemente teilweise durch Abdeckungen geschützt. Hierbei kann es sich um bewegliche Abdeckungen, wie beispielsweise Faltenbälge, Rollbandabdeckungen, Lamellen- oder Gliederschürzen oder Teleskopabdeckungen handeln. Teilweise werden jedoch auch starre Abdeckungen, beispielsweise aus Blechmaterial, eingesetzt. Das Problem dieser Lösungen besteht darin, dass die sich zwangsläufig ergebenden Spalte zwischen den Abdeckungen und dem Maschinenkörper nicht vollständig geschlossen werden können, wodurch die oben erläuterten Verschmutzungen hinter die Abdeckungen gelangen und sich dort ansammeln können. Dies kann ebenfalls zu Beschädigungen der Antriebs- und Führungselemente dieser Bearbeitungsvorrichtungen führen.

Eine gattungsgemäße Vorrichtung ist aus der Veröffentlichung "Firmenschrift der Firma MAKA Systems GmbH: MAKAZIN; Ausgabe 02/2013" bekannt. Problematisch bei dieser Lösung ist jedoch die Tatsache, dass die durch das Führungssystem und die Lager geblasene Druckluft aufgrund des starken Druckabfalls nicht in alle Bereiche, insbesondere nicht in die weit von der Druckluftquelle entfernten Bereiche, gelangt. Dadurch kann, insbesondere bei der Bearbeitung von Kunststoffen, Glas, Stein, Holzwerkstoffen bzw. Holzfaserplatten oder Faserverbundmaterialien, wie GFK oder CFK, das zerspante Material in den Bereich der Lager sowie der Antriebs- und Führungselemente gelangen, was langfristig zu Schäden an der gesamten Bearbeitungsvorrichtung führen kann.

Aus der DE 10 2009 008 221 A1 ist eine Werkzeugmaschine mit temperierter Luftzuführung bekannt. Dabei wird die Luft mittels einer Luftzuführvorrichtung in eine Kammer eingeleitet, die durch eine luftdurchlässig ausgebildete Wandung an einen Arbeitsraum angrenzt, so dass die Luft aus der Kammer durch die Wandung in den Arbeitsraum strömt und diesen temperiert.

Es ist Aufgabe der vorliegenden Erfindung, eine Vorrichtung zur spanenden Bearbeitung von Werkstücken zu schaffen, bei der ein derartiger Luftstrom erzeugt werden kann, dass in sämtlichen Bereichen der die Bewegung zwischen dem Bearbeitungswerkzeug und dem Werkstück ermöglichenden Führungseinrichtung das Eindringen von zerspantem Material verhindert wird.

Erfindungsgemäß wird diese Aufgabe durch die in Anspruch 1 genannten Merkmale gelöst.

Durch die erfindungsgemäße Lösung, die einen wenigstens annähernd gleichmäßigen Volumenstrom von ausströmender Luft in sämtlichen Bereichen des Spalts zwischen dem Führungselement und dem Abdeckelement erzeugt, wird sichergestellt, dass in sämtlichen Bereichen, in denen zerspantes Material, Staub und andere Bearbeitungsrückstände anfallen, verhindert wird, dass diese in den Bereich der Führungen und der Antriebseinrichtungen gelangen können. Dadurch wird ein wesentlich besserer Schutz der gesamten Vorrichtung gegenüber frühzeitigem Verschleiß, insbesondere der Antriebs- und Führungsbauteile derselben, verhindert.

In einer sehr vorteilhaften Weiterbildung der Erfindung kann vorgesehen sein, dass sich der Querschnitt des wenigstens einen Luftkanals von der Luftstromerzeugungsquelle zu der von der Luftstromerzeugungsquelle am weitesten entfernten Öffnung oder dem von der Luftstromerzeugungsquelle am weitesten entfernten Bereich der länglichen Öffnung verringert. Auf diese Weise wird mit relativ einfachen und mit geringem Aufwand realisierbaren Mitteln eine Kompensation des sich ansonsten aufgrund des großen Abstands von der Luftstromerzeugungsquelle verringernden Volumenstroms erreicht. Hierbei kann, durch entsprechende Auswahl der Querschnitte des Luftkanals, eine sehr exakte Gleichmäßigkeit des Volumenstroms erreicht werden.

Alternativ oder zusätzlich kann auch vorgesehen sein, dass sich die Größe der Öffnungen oder die Höhe der länglichen Öffnung von der Luftstromerzeugungsquelle weg vergrößert. Auch auf diese Weise lässt sich der Druckverlust, der aufgrund des Abstands von der Luftstromerzeugungsquelle entsteht, kompensieren und ein sehr gleichmäßiger Volumenstrom erreichen.

Um eine konstruktiv einfache Lösung für den Luftkanal zu schaffen, kann des Weiteren vorgesehen sein, dass der wenigstens eine Luftkanal in einem Grundkörper, an dem das wenigstens eine Führungselement angebracht ist, verläuft.

Wenn in einer weiteren vorteilhaften Ausgestaltung der Erfindung zwei Luftkanäle vorgesehen sind, die von der Luftstromerzeugungsquelle ausgehen und voneinander weg in zwei unterschiedliche Richtungen entlang dem wenigstens einen Führungselement verlaufen, so kann, insbesondere bei recht langen Führungselementen, die maximale Entfernung des Luftauslasses von der Luftstromerzeugungsquelle verringert werden.

Um in diesem Fall Bauteile einzusparen und damit die Kosten der erfindungsgemäßen Vorrichtung in Grenzen zu halten, kann des Weiteren vorgesehen sein, dass die Luftstromerzeugungsquelle so angeordnet ist, dass sie die beiden Luftkanäle mit Strömungsluft versorgt.

Eine besonders gute Wirkung der Luftstromerzeugungsquelle kann erreicht werden, wenn dieselbe als Radialgebläse ausgebildet ist.

Insbesondere wenn bestimmte Werkstücke mittels Unterdruck gespannt werden, kann es vorteilhaft sein, wenn die Luftstromerzeugungsquelle als eine an der Vorrichtung vorhandene Druckerzeugungseinrichtung ausgebildet ist. Auf diese Weise werden die Kosten einer zusätzlichen Luftstromerzeugungsquelle vermieden, da vorhandene Bauteile eingesetzt werden können.

Des Weiteren kann vorgesehen sein, dass die Luftstromerzeugungsquelle Abluft aus einer Absauganlage verwendet. Auf diese Weise kann zur Erzeugung des Luftstroms die Abluft einer bei der erfindungsgemäßen Vorrichtung zur spanenden Bearbeitung der Werkstücke möglicherweise ohnehin vorhandenen Absauganlage eingesetzt werden, wodurch auf zusätzliche Geräte verzichtet werden kann und durch die Steigerung der Energieeffizienz die Kosten der Vorrichtung im laufenden Betrieb gering gehalten werden können.

Das das Führungselement abdeckende Abdeckelement kann beispielsweise als Faltenbalg ausgebildet sein. Hierdurch ist ein zuverlässiger Schutz des Führungselements gegeben, die durch die erfindungsgemäße Ausführung der Einrichtung zur Erzeugung des Luftstroms noch optimiert wird.

Alternativ kann vorgesehen sein, dass das Abdeckelement als Rollband ausgebildet ist. Auch ein solches Rollband stellt einen sehr zweckmäßigen Schutz des Führungselements dar. Als Abdeckelement kommen auch Schiebebleche oder geeignete Metallteile in Frage.

Nachfolgend sind Ausführungsbeispiele der Erfindung anhand der Zeichnung prinzipmäßig dargestellt.

Es zeigt:
- Fig. 1: eine perspektivische Ansicht einer ersten Ausführungsform der erfindungsgemäßen Vorrichtung;
- Fig. 2: einen Schnitt nach der Linie II-II aus Fig. 1;
- Fig. 3: einen Schnitt nach der Linie III-III aus Fig. 1;
- Fig. 4: eine vergrößerte Darstellung nach der Linie IV aus Fig. 3;
- Fig. 5: eine perspektivische Ansicht einer zweiten Ausführungsform der erfindungsgemäßen Vorrichtung;
- Fig. 6: eine vergrößerte Darstellung nach der Linie VI aus Fig. 5;
- Fig. 7: einen Schnitt nach der Linie VII-VII aus Fig. 6;
- Fig. 8: eine vergrößerte Darstellung nach der Linie VIII aus Fig. 7;
- Fig. 9: eine perspektivische Ansicht einer dritten Ausführungsform der erfindungsgemäßen Vorrichtung;
- Fig. 10: eine vergrößerte Darstellung nach der Linie X aus Fig. 10; und
- Fig. 11: einen Schnitt nach der Linie XI-XI aus Fig. 9.

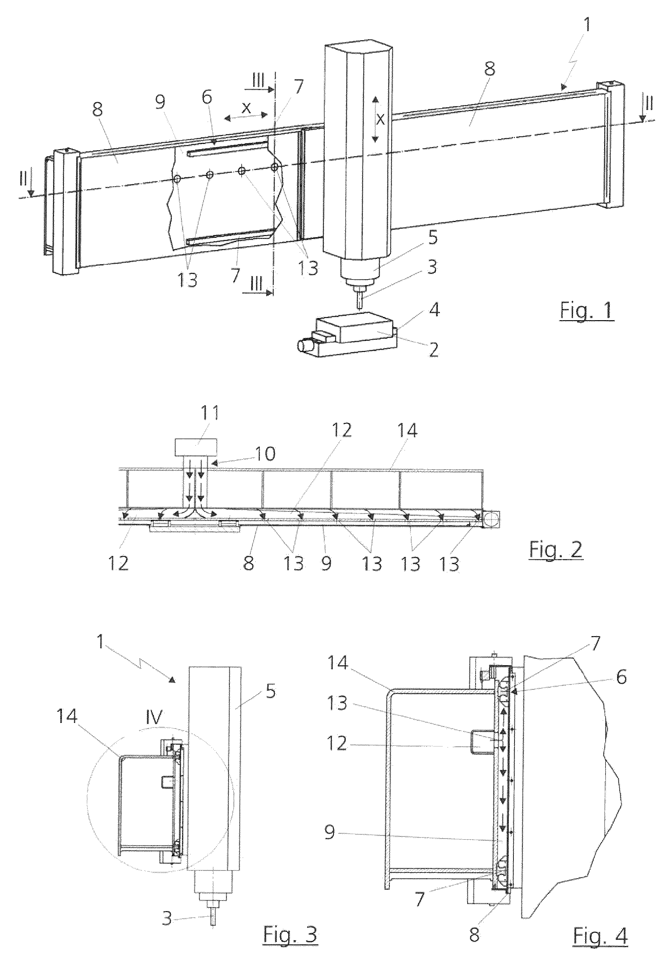

Fig. 1 zeigt eine perspektivische Ausführungsform einer Vorrichtung 1 zur spanenden Bearbeitung von nur sehr schematisch dargestellten Werkstücken 2. Grundsätzlich kann es sich bei der Vorrichtung 1 um eine Werkzeugmaschine, ein Bearbeitungszentrum, eine Dreh-, Fräs-, Säge-, Schleif-, Polier- oder eine andere Maschine zur spanenden Bearbeitung bzw. für eine Bearbeitung, bei der Späne und/oder Stäube erzeugt werden, handeln. Des Weiteren kann die Vorrichtung 1 grundsätzlich eine Standportal-, Fahrportal-, Fahrständer- oder eine andere geeignete Maschine sein. Die Vorrichtung 1 weist ein Bearbeitungswerkzeug 3 zur Bearbeitung des Werkstücks 2 sowie eine ebenfalls sehr schematisch angedeutete Halteeinrichtung 4 für das Werkstück 2 auf. Das Bearbeitungswerkzeug 3, beispielsweise ein Fräswerkzeug, ist mittels einer Spindel 5 antreibbar, wozu die Spindel 5 eine nicht dargestellte Antriebseinrichtung, beispielsweise einen Elektromotor, aufweist.

Um eine zerspanende Bearbeitung des Werkstücks 2 zu erreichen, ist in an sich bekannter Weise zusätzlich zu der Rotation des Bearbeitungswerkzeugs 3 auch eine Relativbewegung zwischen dem Bearbeitungswerkzeug 3 und dem Werkstück 2 notwendig. Hierzu dient eine nicht dargestellte Antriebseinrichtung, die in dem Ausführungsbeispiel von Fig. 1 die Spindel 5 gemäß dem mit "x" bezeichneten Doppelpfeil bewegt. Um diese als Translationsbewegung ausgeführte Relativbewegung zwischen dem Bearbeitungswerkzeug 3 und dem Werkstück 2 zu führen, dient eine Führungseinrichtung 6, die im vorliegenden Fall zwei parallel zueinander verlaufende, als Führungsschienen ausgebildete Führungselemente 7 aufweist.

Um einen gewissen Schutz der Führungseinrichtung 6 und der Führungselemente 7 zu erzielen, sind dieselben mittels eines Abdeckelements 8 abgedeckt. Die Führungselemente 7 sind in Fig. 1 lediglich zu erkennen, da das Abdeckelement 8 teilweise weggebrochen dargestellt ist. Selbstverständlich ist die Führungseinrichtung 6 mit den Führungselementen 7 auch im rechten Bereich der Vorrichtung 1 vorgesehen, dort ist das Abdeckelement 8 jedoch nicht gebrochen dargestellt. Das Abdeckelement 8, das bei der Ausführungsform der Figuren 1 bis 4 als Rollband ausgebildet ist, dient grundsätzlich dazu, ein Eindringen von Bearbeitungsrückständen, wie Spänen, Stäuben und dergleichen, die bei der spanenden Bearbeitung des Werkstücks 2 entstehen, in einen Raum 9 zwischen der Führungseinrichtung 6 bzw. den Führungselementen 7 und dem Abdeckelement 8, also in den Bereich der Führungseinrichtung 6, so gut wie möglich zu verhindern. Prinzipbedingt ist dabei jedoch zwischen den Führungselementen 7 und dem Abdeckelement 8 zumindest abschnittsweise ein von dem Raum 9 nach außerhalb der Vorrichtung 1 führender Spalt vorhanden, durch den Bearbeitungsrückstände von außerhalb in den Bereich der Führungselemente 7 gelangen können. Aufgrund der Relativbewegung zwischen dem Bearbeitungswerkzeug 3 und dem Werkstück 2 können sich die Lage und die Größe des Spalts ändern.

Die Antriebseinrichtung, welche die durch die Führungseinrichtung 6 geführte Relativbewegung zwischen dem Bearbeitungswerkzeug 3 und dem Werkstück 2 erzeugt, ist in den Figuren 1 - 4 nicht dargestellt, es kann sich dabei jedoch um an sich bekannte Antriebseinrichtungen handeln. Neben dem eigentlichen Antriebsmotor, wie beispielsweise einem Elektromotor, kann diese Antriebseinrichtung auch einen Kugelgewindetrieb, einen Ritzel- bzw. Zahnstangenantrieb, einen Zahnriemenantrieb, einen Kettenantrieb oder ähnliches aufweisen. Grundsätzlich ist auch ein Direktantrieb, beispielsweise ein Linearmotor, denkbar.

Bei dem in den Figuren 1 bis 4 dargestellten Ausführungsbeispiel handelt es sich bei den Führungselementen 7 um Führungsschienen, im vorliegenden Fall um Wälzführungen, die beispielsweise als Flach- oder Schwalbenschwanzführungen ausgebildet sind. In nicht dargestellter Weise wären jedoch auch Gleitführungen, Profilschienenführungen, Kugelschienenführungen, Rollenschienenführungen, Linearkugellager oder Kugelbüchsen denkbar, um die Relativbewegung zwischen dem Bearbeitungswerkzeug 3 und dem Werkstück 2 zu ermöglichen.

Um zu verhindern, dass Bearbeitungsrückstände und dergleichen in den Raum 9 zwischen den Führungselementen 7 und dem Abdeckelement 8 eindringen können, ist eine Einrichtung 10 zur Erzeugung eines Luftstroms in dem Raum 9 zwischen den Führungselementen 7 und dem Abdeckelement 8 vorgesehen. Der Verlauf der Luftströme ist in den Figuren mit entsprechenden Pfeilen dargestellt. Diese Einrichtung 10, die eine sehr schematisch angedeutete Luftstromerzeugungsquelle 11 aufweist, ist in Fig. 2 dargestellt. Die Einrichtung 10 zur Erzeugung des Luftstroms in dem Raum 9 weist wenigstens einen Luftkanal 12 auf, der wiederum mehrere Öffnungen 13 in den Raum 9 zwischen den Führungselementen 7 und dem Abdeckelement 8 aufweist. Alternativ zu der Vielzahl von Öffnungen 13 wäre es auch möglich, dass die Einrichtung 10 eine von dem Luftkanal 12 zu dem Raum 9 führende, nicht dargestellte Öffnung aufweist. Auch in dem Schnitt von Fig. 3 sowie insbesondere in der vergrößerten Darstellung von Fig. 4 ist der wenigstens eine Luftkanal 12 mit den Öffnungen 13 erkennbar.

Aus Fig. 2 geht des Weiteren hervor, dass im vorliegenden Fall zwei Luftkanäle 12 vorgesehen sind, die von der Luftstromerzeugungsquelle 11 ausgehen und voneinander weg in zwei unterschiedliche Richtungen entlang der Führungselemente 7 verlaufen. Die Luftstromerzeugungsquelle 11 ist dabei so angeordnet, dass sie die beiden in unterschiedliche Richtungen verlaufenden Luftkanäle 12 mit Strömungsluft versorgt. Bei der Luftstromerzeugungsquelle 11 kann es sich beispielsweise um ein Radialgebläse handeln, das einen gleichmäßigen Volumenstrom in den Luftkanälen 12 erzeugt. Ein derartiges Radialgebläse erzeugt zwar einen verhältnismäßig geringen Druck, jedoch einen sehr hohen Volumenstrom. Selbstverständlich sind auch andere Möglichkeiten zur Realisierung der Luftstromerzeugungsquelle 11 denkbar. Die Einstellung des von der Luftstromerzeugungsquelle 11 erzeugten Volumenstroms kann in Abhängigkeit von den geometrischen Gegebenheiten der Vorrichtung 1, beispielsweise auch von der Größe und der Lage des Spalts, erfolgen.

Grundsätzlich könnte die Luftstromerzeugungsquelle 11 als eine an der Vorrichtung vorhandene Druckerzeugungseinrichtung ausgebildet sein, die in ihrer primären Funktion beispielsweise auf die Halteeinrichtung 4 wirken und damit dazu dienen kann, das Werkstück 2 zu spannen. Beispielsweise kann es sich bei der Luftstromerzeugungsquelle 11 um eine Vakuumpumpe, einen Seitenkanalverdichter oder eine andere geeignete Einrichtung handeln.

Alternativ dazu kann die Luftstromerzeugungsquelle 11 Abluft aus einer nicht dargestellten Absauganlage verwenden, die der Vorrichtung 1 zur spanenden Bearbeitung der Werkstücke 2 zugeordnet sein kann. Um Heizkosten zu sparen, wird teilweise die Abluft von solchen Absauganlagen in das Gebäude, in dem sich die Vorrichtung 1 befindet, zurückgeführt. Wenn diese Abluft dann für die Luftstromerzeugungsquelle 11 zur Erzeugung des Luftstroms in dem Raum 9 genutzt wird, kann möglicherweise das oben beschriebene Radialgebläse oder die anderen genannten Geräte eingespart werden.

Wie in dem Schnitt von Fig. 2 außerdem zu erkennen ist, verlaufen die beiden Luftkanäle 12 in einem Grundkörper 14 der Vorrichtung 1, an dem die Führungselemente 7 der Führungseinrichtung 6 angebracht sind. Bei dem Grundkörper 14 kann es sich beispielsweise um eine Schweißkonstruktion handeln. Das Abdeckelement 8 ist im vorliegenden Fall ebenfalls an dem Grundkörper 14 angebracht.

Die Einrichtung 10 zur Erzeugung des Luftstroms in dem Raum 9 zwischen den Führungselementen 7 und dem Abdeckelement 8 ist so ausgebildet, dass in wenigstens annähernd sämtlichen Bereichen des Spalts zwischen den Führungselementen 7 und dem Abdeckelement 8 ein wenigstens annähernd gleichmäßiger Volumenstrom vorliegt. Bei der Ausführungsform der Figuren 14 wird dies dadurch erreicht, dass sich der Querschnitt des wenigstens einen Luftkanals 12 bzw. in diesem Fall der beiden Luftkanäle 12 von der Luftstromerzeugungsquelle 11 zu der von der Luftstromerzeugungsquelle 11 am weitesten entfernten Öffnung 13, in Fig. 2 also der Öffnung 13 am rechten Ende des Abdeckelements 8, verringert. Selbstverständlich kann die Verringerung des Querschnitts des wenigstens einen Luftkanals 12 in unterschiedlichen Richtungen, d.h. vertikal, horizontal oder in einer anderen Richtung, erfolgen. Des Weiteren ist es möglich, die Verjüngung des Luftkanals 12 nicht stufenlos, sondern in mehreren Stufen vorzunehmen. Grundsätzlich sollte der Luftkanal 12 dabei möglichst strömungsgünstig ausgeführt sein und so wenige Kanten bzw. Ecken wie möglich aufweisen.

Im Falle einer länglichen Öffnung könnte sich der Querschnitt der Luftkanäle 12 von der Luftstromerzeugungsquelle 11 in Richtung zu dem von der Luftstromerzeugungsquelle 11 am weitesten entfernten Bereich der länglichen Öffnung verringern.

In nicht dargestellter Weise könnte sich auch die Größe der Öffnungen 13 oder die Höhe der nicht dargestellten länglichen Öffnung von der Luftstromerzeugungsquelle 11 weg vergrößern, um zu erreichen, dass in wenigstens annähernd sämtlichen Bereichen des Spalts zwischen den Führungselementen 7 und dem Abdeckelement 8 ein wenigstens annähernd gleichmäßiger Volumenstrom vorliegt. Eine solche längliche Öffnung könnte beispielsweise durch einen geschlitzten Kanal, bzw. eine geschlitzte Rohrleitung mit einer entsprechenden Verjüngung realisiert werden.

Durch diesen wenigstens annähernd gleichmäßigen Volumenstrom wird erreicht, dass auch in den von der Luftstromerzeugungsquelle 11 entfernten Bereichen des Spalts zwischen den Führungselementen 7 und dem Abdeckelement 8 ein ausreichender Volumenstrom vorliegt, der ein Eindringen von Bearbeitungsrückständen oder dergleichen in den Raum 9 zwischen den Führungselementen 7 und dem Abdeckelement 8 verhindert wird.

Bei dem in der Ausführungsform der Figuren 1 bis 4 dargestellten Luftkanal 12 handelt es sich um eine an der Wandung des Grundkörpers 14 angebrachte Schweißkonstruktion, bei der einzelne Bleche durch Verschweißen miteinander verbunden werden. Es wäre jedoch grundsätzlich auch möglich, den Luftkanal 12 bzw. die Luftkanäle 12 unmittelbar in eine Gusskonstruktion des Grundkörpers 14 einzubetten. Beispielsweise könnte es sich dabei um Aluminium-, Grau- oder Stahlguss, jedoch auch um nichtmetallische Gusskonstruktionen handeln, wie beispielsweise bei Maschinenteilen aus Beton, die mineralisch oder mittels Kunstharz gebunden sein können.

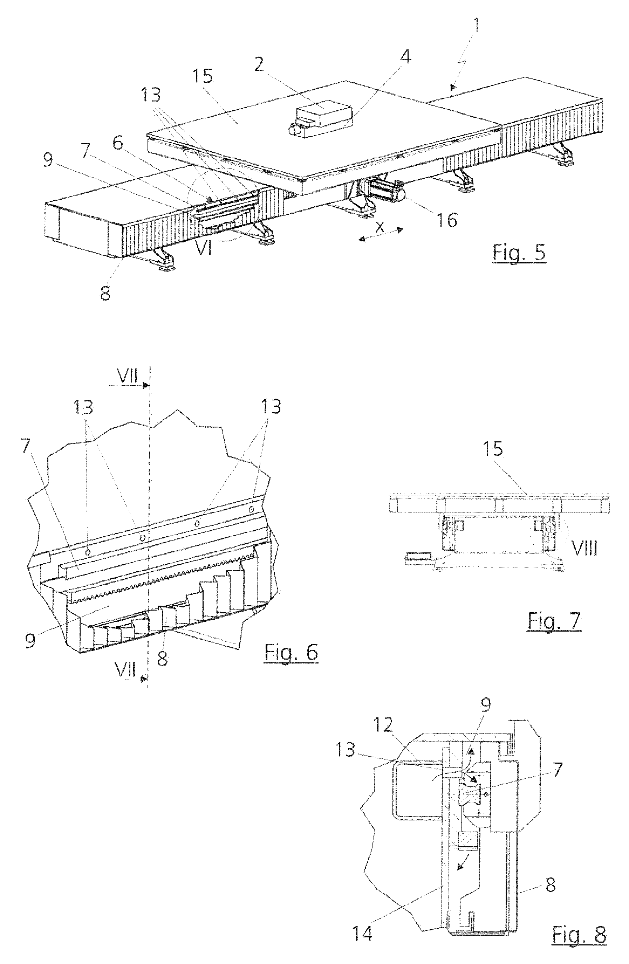

In den Figuren 5 bis 8 ist eine weitere Ausführungsform der Vorrichtung 1 mit der Einrichtung 10 zur Erzeugung des Luftstroms in dem Raum 9 zwischen der Führungseinrichtung 6 und dem Abdeckelement 8 dargestellt. Hierbei ist die Führungseinrichtung 6 einem Maschinentisch 15, auf dem das Werkstück 2 mittels der Halteeinrichtung 4 gehalten ist, zugeordnet. Die Führungseinrichtung 6 weist in diesem Fall lediglich ein wiederum als Führungsschiene ausgebildetes Führungselement 7 auf, das unter dem in diesem Fall als Faltenbalg ausgebildeten Abdeckelement 8 angeordnet ist und damit durch das Abdeckelement 8 vor Verschmutzungen geschützt werden soll.

Wiederum weist die Einrichtung 10 den Luftkanal 12 auf, der dem Grundkörper 14 zugeordnet ist, an dem das Führungselement 7 angebracht ist. In Fig. 5 ist außerdem eine Antriebseinrichtung 16 dargestellt, die zur Erzeugung der Relativbewegung zwischen dem Bearbeitungswerkzeug 3 und dem Werkstück 2 sorgt. Im vorliegenden Fall wird mittels der Antriebseinrichtung 16 der Maschinentisch 15 und damit das darauf angebrachte Werkstück 2 gegenüber dem Bearbeitungswerkzeug 3 bewegt. Grundsätzlich ist selbstverständlich auch denkbar, das Bearbeitungswerkzeug 3 gegenüber dem Werkstück 2 zu bewegen, um die gewünschte Relativbewegung zu erzeugen.

Des Weiteren sind auch in diesem Fall die Öffnungen 13 von dem Luftkanal 12 in den Raum 9 zwischen dem Abdeckelement 8 und der Führungseinrichtung 6 bzw. dem Führungselement 7 vorgesehen. Auch hier ist die Einrichtung 10 zur Erzeugung des Luftstroms in dem Raum 9 so ausgeführt, dass in wenigstens annähernd sämtlichen Bereichen des Spalts zwischen dem Abdeckelement 8 und dem Führungselement 7 bzw. der Führungseinrichtung 6 ein wenigstens annähernd gleichmäßiger Volumenstrom vorliegt.

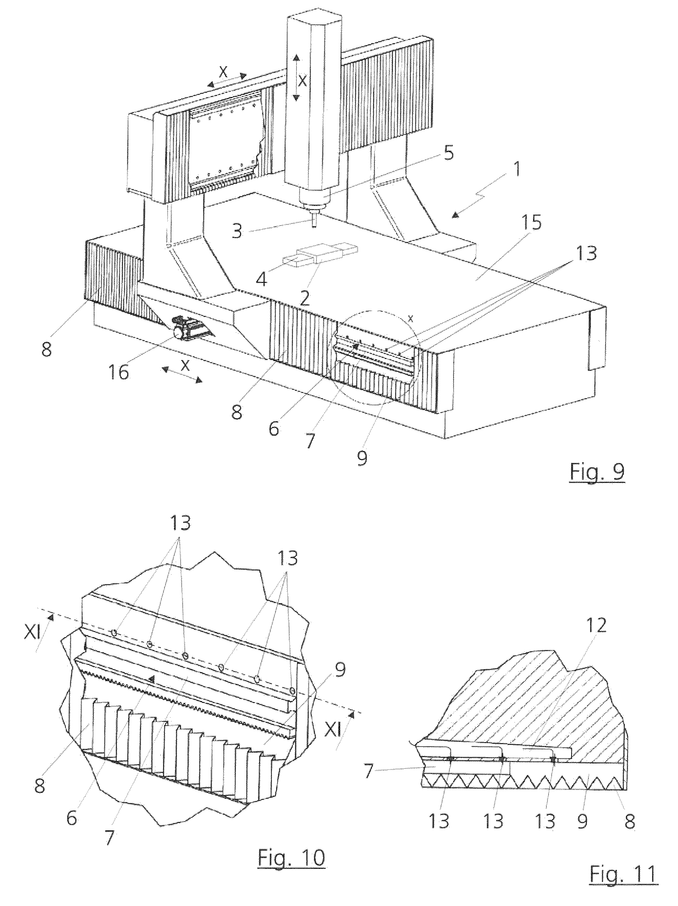

Eine weitere Ausführungsform der Vorrichtung 1 zeigen die Figuren 9, 10 und 11. Hierbei ist sowohl die Führungseinrichtung 6, die zur Bewegung der Spindel 5 erforderlich ist, als auch die Führungseinrichtung 6, die zur Bewegung des Maschinentischs 15 verwendet wird, dargestellt. Im Prinzip handelt es sich demnach um eine Kombination der Ausführungsformen der Figuren 1 bis 4 und der Figuren 5 bis 8. Wiederum ist die Einrichtung 10, die zur Erzeugung des Luftstroms in dem Raum 9 zwischen dem Führungselement 7 bzw. den Führungselementen 7 und dem Abdeckelement 8 dient, so ausgebildet, das in wenigstens annähernd sämtlichen Bereichen des Spalts, bzw. an sämtlichen Austrittsstellen des Luftkanals 2 in den Raum 9, also den Öffnungen 13 oder der länglichen Öffnung 13, ein wenigstens annähernd gleichmäßiger Volumenstrom vorliegt.

Neben den in den Figuren 1 bis 4 bzw. in den Figuren 5 bis 8 bzw. in den Figuren 9 bis 11 dargestellten Ausführungsformen der Vorrichtung 1 sind noch die unterschiedlichsten anderen Ausführungsformen der Vorrichtung 1 denkbar, bei denen die Einrichtung 10 zum Erzeugen des Luftstroms in dem Raum 9 zwischen dem Abdeckelement 8 und der Führungseinrichtung 6 vorgesehen und in ähnlicher Weise ausgeführt ist. Die Einrichtung 10 lässt sich also an den unterschiedlichsten Vorrichtungen 1 realisieren.

Prinzipiell können im Bereich des Spalts von dem Raum 9 an dem Abdeckelement 8 vorbei nach außen auch Bürsten oder ähnliche Dichtungselemente vorgesehen sein, die jedoch erst in Kombination mit der Einrichtung 10 zur Erzeugung des Luftstroms in den Raum 9 ein Eindringen von Bearbeitungsrückständen und dergleichen verhindern.

## Patentansprüche

1. Vorrichtung (1) zur spanenden Bearbeitung von Werkstücken (2), mit wenigstens einem Bearbeitungswerkzeug (3), mit wenigstens einer Halteeinrichtung (4) für das Werkstück (2), mit wenigstens einer Antriebseinrichtung (16) zur Erzeugung einer Relativbewegung zwischen dem Bearbeitungswerkzeug (3) und dem Werkstück (2), mit wenigstens einer Führungseinrichtung (6) zur Führung der Relativbewegung zwischen dem Bearbeitungswerkzeug (3) und dem Werkstück (2), wobei die Führungseinrichtung (6) wenigstens ein Führungselement (7) und wenigstens ein das Führungselement (7) zumindest teilweise abdeckendes Abdeckelement (8) aufweist, und wobei zwischen dem Führungselement (7) und dem Abdeckelement (8) zumindest abschnittsweise ein Spalt vorhanden ist, und mit einer Einrichtung (10) zur Erzeugung eines Luftstroms in einem Raum (9) zwischen der Führungseinrichtung (6) und dem Abdeckelement (8), welche eine Luftstromerzeugungsquelle (11) aufweist,
**dadurch gekennzeichnet, dass**
die Einrichtung (10) zur Erzeugung des Luftstroms in dem Raum (9) zwischen der Führungseinrichtung (6) und dem Abdeckelement (8) wenigstens einen Luftkanal (12) aufweist, der mehrere Öffnungen (13) oder eine längliche Öffnung in den Raum (9) zwischen der Führungseinrichtung (6) und dem Abdeckelement (8) aufweist, und dass die Einrichtung (10) zur Erzeugung des Luftstroms in dem Raum (9) zwischen der Führungseinrichtung (6) und dem Abdeckelement (8) so ausgebildet ist, dass in wenigstens annähernd sämtlichen Bereichen des Spalts ein wenigstens annähernd gleichmäßiger Volumenstrom vorliegt.

2. Vorrichtung nach Anspruch 1,
**dadurch gekennzeichnet, dass** sich der Querschnitt des wenigstens einen Luftkanals (12) von der Luftstromerzeugungsquelle (11) zu der von der Luftstromerzeugungsquelle (11) am weitesten entfernten Öffnung (13) oder dem von der Luftstromerzeugungsquelle (11) am weitesten entfernten Bereich der länglichen Öffnung verringert.

3. Vorrichtung nach Anspruch 1 oder 2,
**dadurch gekennzeichnet, dass**
sich die Größe der Öffnungen (13) oder die Höhe der länglichen Öffnung von der Luftstromerzeugungsquelle (11) weg vergrößert.

4. Vorrichtung nach Anspruch 1, 2 oder 3,
**dadurch gekennzeichnet, dass**
der wenigstens eine Luftkanal (12) in einem Grundkörper (14), an dem das wenigstens eine Führungselement (7) angebracht ist, verläuft.

5. Vorrichtung nach einem der Ansprüche 1 bis 4,
**dadurch gekennzeichnet, dass**
zwei Luftkanäle (12) vorgesehen sind, die von der Luftstromerzeugungsquelle (11) ausgehen und voneinander weg in zwei unterschiedliche Richtungen entlang des wenigstens einen Führungselements (7) verlaufen.

6. Vorrichtung nach Anspruch 5,
**dadurch gekennzeichnet, dass**
die Luftstromerzeugungsquelle (11) so angeordnet ist, dass sie die beiden Luftkanäle (12) mit Strömungsluft versorgt.

7. Vorrichtung nach einem der Ansprüche 1 bis 6,
**dadurch gekennzeichnet, dass**
die Luftstromerzeugungsquelle (11) als Radialgebläse ausgebildet ist.

8. Vorrichtung nach einem der Ansprüche 1 bis 7,
**dadurch gekennzeichnet, dass**
die Luftstromerzeugungsquelle (11) als eine an der Vorrichtung (1) vorhandene Druckerzeugungseinrichtung ausgebildet ist.

9. Vorrichtung nach einem der Ansprüche 1 bis 6,
**dadurch gekennzeichnet, dass**
die Luftstromerzeugungsquelle (11) Abluft aus einer Absauganlage verwendet.

10. Vorrichtung nach einem der Ansprüche 1 bis 9,
**dadurch gekennzeichnet, dass**
das Abdeckelement (8) als Faltenbalg oder als Rollband ausgebildet ist.
